(19) **Europäisches Patentamt** / **European Patent Office** / **Office européen des brevets**

(11) **EP 3 128 057 B1**

(12) **EUROPÄISCHE PATENTSCHRIFT**

(45) Veröffentlichungstag und Bekanntmachung des Hinweises auf die Patenterteilung:
**12.06.2019 Patentblatt 2019/24**

(51) Int Cl.:
***D04H 1/49*** *(2012.01)*     ***D04H 1/492*** *(2012.01)*
***D04H 1/541*** *(2012.01)*

(21) Anmeldenummer: **16001605.1**

(22) Anmeldetag: **25.07.2016**

(54) **DEHNBARER VLIESSTOFF, VERFAHREN ZUR HERSTELLUNG EINES DEHNBAREN VLIESSTOFFES UND VERWENDUNG DESSELBEN**

STRETCHABLE NONWOVEN MATERIAL, METHOD OF MAKING A STRETCHABLE NONWOVEN FABRIC AND USE OF THE SAME

TISSU NON TISSE EXTENSIBLE, PROCEDE DE FABRICATION D'UN TISSU NON TISSE EXTENSIBLE ET SON UTILISATION

(84) Benannte Vertragsstaaten:
**AT CH DE ES FI FR LI SE**

(30) Priorität: **03.08.2015 DE 102015010105**

(43) Veröffentlichungstag der Anmeldung:
**08.02.2017 Patentblatt 2017/06**

(73) Patentinhaber: **Sandler AG**
**95126 Schwarzenbach/Saale (DE)**

(72) Erfinder:
• **Die Erfinder haben auf ihr Recht verzichtet, als solche bekannt gemacht zu werden.**

(56) Entgegenhaltungen:
**US-A- 5 240 764        US-A- 5 334 446**
**US-A1- 2003 213 546    US-A1- 2007 141 926**

## Beschreibung

Die vorliegende Erfindung betrifft dehnbare Vliesstoffe, wie sie beispielsweise als Komponenten in elastischen Komponenten für persönliche Hygieneartikel wie beispielsweise Windeln und Pants eingesetzt werden. Insbesondere betrifft die Erfindung dehnbare Vliesstoffe mit wasserverfestigten Stapelfasern, ein Verfahren zur Herstellung entsprechender Vliesstoffe und ein elastisches, mehrlagiges Laminat unter Verwendung des Vliesstoffes.

Elastische Komponenten für persönliche Hygieneartikel umfassen dabei beispielsweise ein auf dem Windelchassis angebrachtes Windelohr. Am Windelbund befindet sich die sogenannte Landingzone. Diese bildet das Gegenstück, in welches sich bei Schließen der Windel das Hakenmaterial mechanisch verhakt. Das Windelohr besteht gemäß des Standes der Technik aus einem mehrlagigen Laminat, welches nach Stand der Technik einseitig am Windelchassis hinten thermisch oder mittels Ultraschall fixiert wird. Weiterhin wird an der dem Windelbund zugewandten offenen Seite des Ohres ein Hakenmaterial ebenfalls thermisch angebracht.

Um den Tragekomfort und die Passform zu erhöhen, enthalten diese Laminate elastische Komponenten, häufig Folien, die nach dem Schließen der Windel durch die Rückstellkraft des Plastikanteils eine Anpassung des Windelbundes an die Körperform ermöglichen. Um dem Benutzer ein ansprechendes Griff-Gefühl zu geben, sind die elastischen Komponenten häufig ein- oder beidseitig mit textilen Deckschichten aus Vliesstoff abgedeckt.

Untersuchungen haben ergeben, dass der Benutzer beim Schließen einer Windel am Windelohr eine Kraft im Bereich von max. 10N benötigt. Die dabei übliche Dehnungsbeanspruchung liegt im Bereich von 0-100 %. Nach Wegfall der Dehnungsbeanspruchung muss sich das Windelohr aufgrund der Elastizität weitestgehend wieder zurückstellen. Dieser Bereich zwischen 0 bis 10N Belastung und 0-100 % Dehnung wird auch als funktioneller Bereich bezeichnet.

Dafür geeignete Materialien bestehen zumeist aus einem Laminat, bei welchen eine elastische Schicht mindestens auf einer Seite mit einer Deckschicht abgedeckt ist. Der Verbund zwischen den Schichten kann dabei mittels Verklebung oder auch thermischer Laminierung erfolgen.

Für eine geeignete Deckschicht ergeben sich daher folgende Anforderungen:

a. geringe Steigung der Kraft-Dehnungskurve im funktionellen Bereich bei Belastung in Querrichtung
b. Längsstabilität, sodass bei der Verarbeitung nur eine geringe Breitenänderung eintritt
c. wenige Arbeitsschritte bei der Windelohr-Herstellung
d. kein Abflusen von Fasermaterial während der Benutzung
e. geringe Staubbildung bei der Verarbeitung
f. Stoppfunktion zur Verhinderung eine Überdehnung
g. Geringe Dicke um wirtschaftliche Rollenlaufzeiten zu realisieren
h. ausreichende Thermoversiegelung zur Gewährleistung einer guten Verbundhaftung mit dem Chassis der Windel oder Pants und der Hooks.

Die prinzipiell am Markt eingeführten Systeme sind beispielsweise in dem Artikel "Performance and Fit", der Autoren Dr. Hornfeck und Bernhuber, Nonwoven Industry, Januar 2013, Seiten 56 bis 62 beschrieben. Hierbei werden insbesondere die Vorteile von wasserstrahlverfestigten Vliesmaterialien hervorgehoben.

Deckschichten können beispielsweise aus thermisch kalanderverfestigten Stapelfaservliesen bestehen. Gattungsbildend ist hier die EP 2069141 B1. Aus dieser Druckschrift ist eine aktivierbare spannungslose Verbundlaminatbahn bekannt, welche eine aktivierbare elastische Laminatbahn und mindestens eine vorgebundene Stapelfaser-Vliesbahn aufweist. Die aktivierbare elastische Laminatbahn umfasst eine elastische Kernschicht und eine Außenschicht, die weniger elastisch als die Kernschicht ist. Die Stapelfaser-Vliesbahn ist an einer der Außenschichten der elastischen Laminatbahn befestigt und weist eine Bruchdehnung von mindestens 100% in Querrichtung auf. Die aktivierbare elastische Laminatbahn bildet eine im Wesentlichen homogene mikrotexturierte Fläche, wenn sie bei der ersten Belastung jenseits der Elastizitätsgrenze der einen oder der mehreren Außenschichten gedehnt wird.

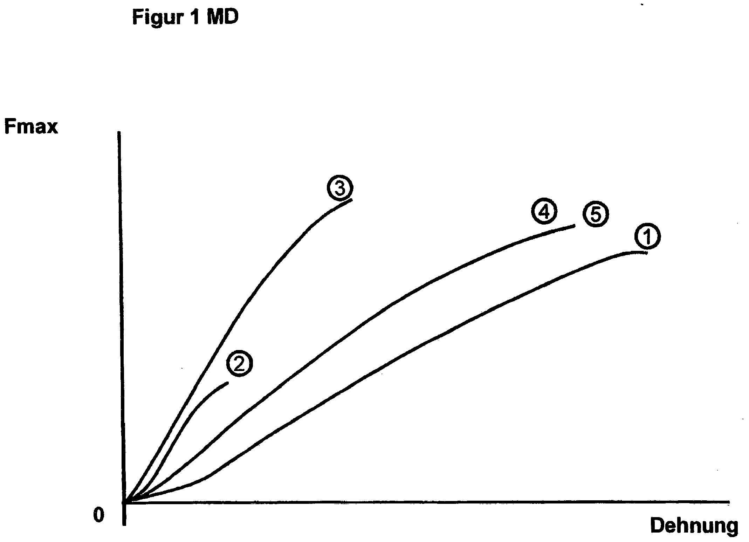

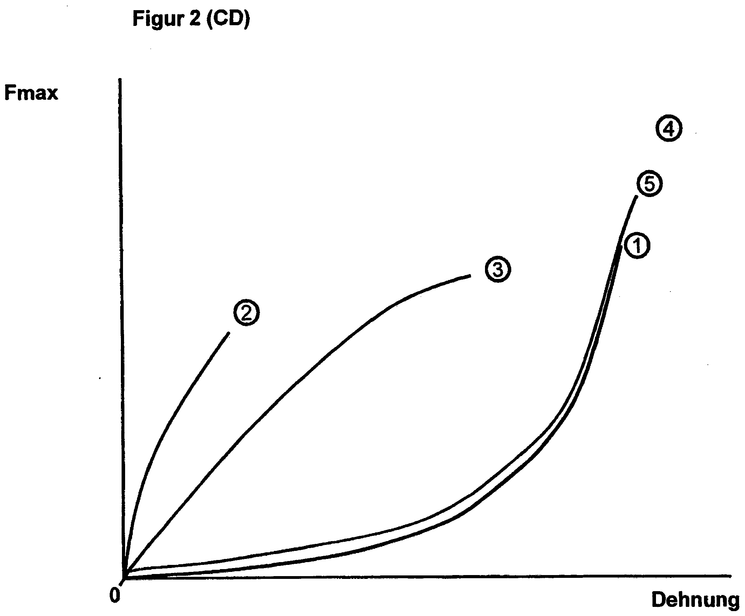

Kennzeichnend für derartige Stapelfaservliese ist ein Kraft-Dehnungsverhalten in MD und CD wie in Figur 1 und 2 dargestellt. Die Verfestigungsfläche am Kalander liegt zwischen 8 und 22 %. Durch diese thermische Verfestigung wird der der Verfestigungsfläche entsprechende Anteil von Fasern im Vlies miteinander verschmolzen und daher im Vliesverbund fixiert. Derartige Vliese haben trotz guter Dehnbarkeit in Querrichtung eine ausreichende Stabilität in Längsrichtung, sodass Warenspannungsschwankungen in Längsrichtung nur wenig Einfluss auf die Breite haben. Derartige Vliesstoffe sind auch dünn genug, um große Rollenlängen herzustellen, was sich positiv auf die Effizienz bei der Weiterverarbeitung auswirkt.

Nachteilig Ist bei derartig hergestellten Stapelfaservliesen, dass diese im funktionellen Bereich des Windelohrs eine im Vergleich zur elastischen Komponente zu steile Kraft-Dehnungskurve in CD aufbauen, was von dem Anwender als negativ empfunden wird. Üblicherweise werden daher Laminate, die thermisch kalanderverfestigte Stapelfaservliese verwenden, in einem zusätzlichen Arbeitsschritt aktiviert. Diese Aktivierung stellt eine Überdehnung des Materials in Querrichtung mit dem Zweck dar, einen Großteil der bestehenden Bindepunkte aufzubrechen, sodass in der späteren Benutzung die zur Dehnung des Windelohrs aufzubringende Kraft möglichst gering ist. Diese Aktivierung erfolgt im laminierten Zustand, d.h. zusammen mit der elastischen Komponente, kann aber auch vorher erfolgen. Nachteilig ist, dass diese Vliese dabei in ihrer Struktur derart geschädigt werden, dass die das Vlies bildende Fasern nicht mehr vollständig im Vlies gehalten werden. In der Folge können Fasern aus dem Vlies ausgetragen werden und abflusen; auch eine Delaminierung ist möglich. Weiterhin bringt das Vlies keine festigkeitssteigernden Merkmale in das Windelohr mit ein.

Bezogen auf das vorerwähnte Anforderungsprofil ergibt sich, dass thermisch kalanderverfestigte Vliesstoffe, die vorab genannten Anforderungen b, e und g erfüllen, die anderen Anforderungen jedoch nicht.

Die EP 1921192 B1 beschreibt die Verwendung von wasserstrahlverfestigten Filament- oder Stapelfaservliesstoffen für den gleichen Einsatzzweck. Aufgrund der Wasserstrahlverfestigung sind die Verfestigungsstellen der Fasern untereinander nicht starr fixiert, sondern flexibel. Eine für ein derartiges Material typische Kraft-Dehnungskurve ist in Figur 1, Kurve 1 dargestellt. Der vorgeschriebene Aktivierungsvorgang kann bei der Verwendung von derartigen Vliesstoffen entfallen. Die Verwendung von Schmelzfasern in Kombination mit Wasserstrahlvernadelung wird in den Schriften US5240764, US2003/0213546A1, US2007/0141926A1 und US5334446 aufgezeigt. Nachteilig ist dabei, dass Vliesstoffe der vorstehenden Art zu einer erhöhten mechanischen Stabilität fuhren.

Durch die Wasserstrahlvernadelung werden die Fasern umorientiert, sodass die ursprüngliche zweidimensionale Faserausrichtung in eine dreidimensionale Faserorientierung überführt wird. Die Fasern sind daher stärker in das Vlies eingebunden, und die Gefahr der Staubbildung bei der Verarbeitung oder aber Abflusen im Gebrauch wird minimiert.

Nachteilig ist bei derartig wasserstrahlverfestigten Vliesen, dass diese eine höhere Dicke als die vorerwähnten kalanderverfestigten Vliesstoffe aufweisen. Als Folge davon weisen die Rollen eine geringere Lauflänge auf, was einen häufigeren Rollenwechsel notwendig macht und zusätzliche Kosten verursacht. Des weiteren haben die wasserstrahlverfestigten Vliese im Vergleich zu kalanderverfestigten Vliesen eine höhere Dehnung in Längsrichtung des Materials und sind daher schwieriger in der Verarbeitung, da bereits geringe Schwankungen im Bahnzug zu Breiteneinsprüngen führen und so Ausschuss aufgrund von Minderbreite erzeugt wird.

Aufgabe der vorliegenden Erfindung ist es daher, die vorgeschriebenen Nachteile des Standes der Technik zu vermeiden.

Die vorliegende Aufgabe wird durch einen dehnbaren Vliesstoff, insbesondere Deckmateriallage für ein mehrlagiges Laminat, umfassend wasserstrahlverfestigte Stapelfasern gemäss Anspruch 1 gelöst.

Ein entsprechendes Material zeichnet sich durch ein besonders gutes Kraft-Dehnungsverhalten aus, besitzt ein gutes Dehnverhalten in Querrichtung und ist insbesondere für Verarbeitungseinflüsse in Längsrichtung unempfindlich. Durch den Einsatz von Bindefasern können sowohl die bei der Wasserstrahlverfestigung entstehenden Faserverwirbelungen als auch ungebundene Fasern im Faserverbund fixiert werden.

Gemäß der Erfindung sind die Bindefasern ebenfalls Stapelfasern. Auf diese Weise wird eine gute Faserverwirbelung durch die Wasserstrahlverfestigung gewährleistet.

Hierbei kann der dehnbare Vliesstoff einen Gewichtsbereich von 15 bis 40 g/Quadratmeter aufweisen.

Gemäß der Erfindung sind Stapelfasern mit zwei unterschiedlichen Titerbereichen enthalten. Hierbei können die Stapelfasern aus dem gleichen Material bestehen und die gleiche Faserlänge aufweisen. Durch den Einsatz unterschiedlicher Titerbereich kann ein sehr stabiles dehnbares Vlies erzielt werden.

Gemäss der Erfindung enthält der Vliesstoff 40-45 Gew.-% erster Stapelfasern mit 1,3 dtex/40mm, 40-45 Gew.-% zweiter Stapelfasern mit 2,2 dtex/40 mm und 10-20 Gew.-% Bindefasern mit 2,2 dtex/40mm. Als Material für die Stapelfasern hat sich beispielsweise Polypropylen als besonders geeignet erwiesen.

Eine andere Ausführungsform kann vorsehen, dass die Bindefasern Bikomponentenfasern, insbesondere Bikomponentenfasern mit einer Mantel/Kern-Struktur, sind. Bei entsprechenden Bikomponentenfasern weist das Material des Mantels eine niedrigere Schmelztemperatur als das Material des Kerns auf. Hierdurch wird die strukturelle Stabilität des entstehenden Vliesstoffes zusätzlich unterstützt.

Vorzugsweise sind die Stapelfasern thermoplastische Fasern, wobei die Bindefasern einen mindestens 10 °C geringeren Schmelzpunkt als die übrigen Stapelfasern aufweisen. Hierdurch wird die punktuelle thermische Verfestigung gewährleistet.

Gemäß einer bevorzugten Ausführungsform wird der beschriebene dehnbare Vliesstoff als Deckmateriallage für eine elastische Komponente, insbesondere in einem Verschlusssystem für persönliche Hygieneartikel eingesetzt. Der erfindungsgemäße Vliesstoff erfüllt alle an ein entsprechendes Material gestellten Anforderungen und kann gleichzeitig kostengünstig produziert werden.

Bezüglich des Verfahrens zur Herstellung eines dehnbaren Vliesstoffes stellt die vorliegende Erfindung ein Verfahren zur Verfügung, umfassend das Vermischen von Stapelfasern und Bindefasern, Kardieren der Fasern zur Herstellung eines Vlieses, Durchführen einer Wasserstrahlverfestigung und anschließender Trocknung mit Heißluft zur Entfernung von überschüssigem Wasser, wobei die Bindefasern während der Trocknung aktiviert und thermisch verfestigt werden. Das erfindungsgemäße Verfahren ist besonders einfach durchzuführen, da die thermische Verfestigung während des ohnehin notwendigen Trocknungsschrittes durchgeführt wird, so dass auf zusätzliche Verfahrensschritte verzichtet werden kann. Hierdurch wird gleichzeitig die Verfahrensdauer nicht verlängert, so dass die Gesamtkosten reduziert werden können.

Ferner betrifft die Erfindung ein elastisches, mehrlagiges Laminat zur Verwendung in einer elastischen Komponente für persönliche Hygieneartikel, bestehend aus einem elastischen Basismaterial, ein- oder beidseitig abgedeckt mit einem Deckmaterial, wobei das Deckmaterial aus einem dehnbaren Vliesstoff, wie oben definiert, gebildet ist. Es hat sich herausgestellt, dass der erfindungsgemäße Vliesstoff, alle Anforderung an ein entsprechendes Deckmaterial besonders gut erfüllt.

Die im nachfolgenden Text verwendeten Begriffe und Testverfahren sind wie folgt definiert:
Die Begriffe "Faser und Stapelfaser" werden im Rahmen dieser Beschreibung synonym verwendet. Sie bezeichnen synthetisch hergestellte Faserstoffe, die eine definierte Schnittlänge, angegeben in mm und einen definierten Faserdurchmesser, auch bezeichnet als Titer und in dtex angegeben, aufweisen. Sollten Fasern aus synthetischen Polymeren verwendet werden, so können Polypropylen, Polyester, Polyamid, Polyethylen, Polylactid, aber auch Viskose, Tencel (Handelsname der Lenzig AG) verwendet werden, ohne auf diese Materialien beschränkt zu sein. Erfindungsgemäss werden Fasern im Titerbereich von 1,3 bis 2,2 dtex verwendet. Es kommen Kardierverfahren zur Anwendung. Die Schnittlängen der Fasern liegen bei bei 40 mm. Die Faser-Höchstzugkraftdehnungen einsetzbarer Fasern liegen im Bereich von 130-580 %.

Der Begriff "Binde- bzw. Schmelzfaser" bezeichnet thermoplastische, synthetische Fasern, die im Vergleich zu anderen in der Fasermischung vorhandenen Fasern entweder überhaupt schmelzbar sind oder aber einen mindestens 10 °C geringeren Schmelzpunkt aufweisen als andere, in der Fasermischung vorhandenen thermoplastischen Fasern. Dabei können homogen aufgebaute Bindefasem, aber auch Bikomponenten-Bindefasern zum Einsatz kommen. Derartige Bikomponenten-Bindefasern bestehen aus zwei unterschiedlichen Polymeren, wobei der Schmelzpunkt des einen Polymers um mindestens 10 °C höher liegt, als der eines zweiten ebenfalls in den Fasern vorhandenen Polymers. Diese Polymere liegen dabei üblicherweise als Kern/Mantel-Struktur, wobei das Material des Kerns den höheren Schmelzpunkt und das Material des Mantels den geringeren Schmelzpunkt aufweist, als "Side by Side"-Konstruktion oder auch als "Sea-Island-Typ" vor.

Erfindungsgemäß bevorzugt werden Bikomponenten-Bindefasern mit einer Kern/Mantel-Struktur.

Der Begriff "Trockenverfahren" bezeichnet das Herstellungsverfahren für die erfindungsgemäßen Deckschichten. Die erfindungsgemäßen Deckschichten werden gemäß eines üblichen Trockenverfahrens hergestellt, welches Fachleuten auf dem Gebiet bekannt ist. Erfindungsgemäß bevorzugt wird das Kadierverfahren unter Verwendung von Stapelfasern. In der nachfolgenden Beschreibung wird die Erfindung anhand von mittels Kardierverfahren hergestellten Vliesstoffen näher beschrieben. Es sollte jedoch klar sein, dass auch jedes andere bekannte Trockenverfahren anstelle des Kadierverfahrens eingesetzt werden kann.

Der Begriff "Wasserstrahlverfestigung" bezeichnet ein Verfestigungsverfahren für die erfindungsgemäßen Deckschichten. Bei diesem Verfahren erfolgt die Verwirbelung von Faser- und Spinnvliese mit Wasserstrahlen. Die grundlegenden Techniken der Wasserstrahlverfestigung werden beispielsweise in dem Buch "Vliesstoffe", erschienen im Verlag Wiley VCH, 2. Aufl., 2012, Seiten 340-359 beschrieben.

Der Begriff "thermische Verfestigung" bezeichnet ein Verfestigungsverfahren für Vliesstoffe, wobei unter Zuhilfenahme von Hitze eine schmelzbare Komponente innerhalb der Fasermischung nach Schmelzen und nachfolgendem Abkühlen zur Verfestigung beiträgt. Erfindungsgemäß bevorzugt wird die Heißluftverfestigung -auch Thermofusion genannt-, bei welcher es sich um eine Trockenverfestigung handelt, die das Vorhandensein thermoplastischer Fasern voraussetzt. Das entsprechende Verfahren wird beispielsweise in dem Buch Vliesstoffe, erschienen im Verlag Wiley VCH, 2. Aufl., 2012, Seiten 375-382 beschrieben. Wichtig ist, dass das Vlies schnell auf die Schmelztemperatur der Schmelz/Bindefaser gebracht wird und sobald die Temperatur erreicht ist, die Luftströmung gedrosselt wird, damit das Volumen des Vlieses erhalten bleibt. Anschließend erfolgt die Kühlung, um eine mögliche Schrumpfung der Bindefasern und damit verbundene Abnahme der Vliesdicke so weit wie möglich auszuschließen.

In diesem Zusammenhang ist festzuhalten, dass sich die thermische Verfestigung von der thermischen Kalanderverfestigung unterscheidet. Der Unterschied der thermischem Verfestigung zur thermischem Kalanderverfestigung liegt darin begründet, dass die thermische Verfestigung ohne einen Kalander, d.h. ohne eine Druck- bzw. Kompressionsbehandlung, bei welcher Fasern miteinander verschweißt werden, auskommt. Bei der Kalanderverfestigung erfolgt der thermische Verbund nur an definierten Prägestellen. Demgegenüber erfolgt bei der thermischen Verfestigung aufgrund der gleichmäßigen Verteilung der Bindefasern in der Fasermischung und daher im späteren Vliesstoff eine homogene Verfestigung innerhalb der gesamten Vliesstruktur.

Im Folgenden wird die Erfindung anhand eines Ausführungsbeispiel unter Bezugnahme auf die beigefügten Zeichnungen näher erläutert. Es zeigt:

Figur 1    das Kraft-Dehnungsverhalten unterschiedlich hergestellter Vliese bei Zugbelastung in Maschinenlaufrichtung (MD = Machine Direction), wobei die Kurven 1-3 Vergleichsbeispiele darstellen und die Kurven 4 bis 5 erfindungsgemäße Beispiele zeigen.

Figur 2    das Kraft-Dehnungsverhalten unterschiedlich hergestellter Vliese bei Zugbelastung quer zur Maschinenlaufrichtung (CD = Cross Direction). Die in den einzelnen Kurven verwendeten Materialien entsprechen den Materialien der Figur 1.

Die vorliegende Erfindung wird anhand unterschiedlicher Fasermischungen, sowohl erfindungsgemäßer Mischungen als auch Vergleichsmischungen, und Verfahrenseinstellungen näher erläutert. Die einzelnen Fasermischungen sowie ihre Eigenschaften sind in der nachfolgenden Tabelle 1 aufgeführt.

Folgende Fasermischungen wurden im Rahmen dieses Ausführungsbeispiels näher untersucht:

Muster 1:    Vergleichsbeispiel
wasserstrahlverfestigtes Vlies, 25 g/m$^2$
Faser: 50 Gew.-% Polypropylenfasern, 1,3 dtex/40mm und 50 Gew.-% Polypropylenfasern 2,2 dtex/40mm, Wasserstrahlverfestigt

Muster 2:    Vergleichsbeispiel
thermisch verfestigtes Vlies, 25 g/m$^2$
Faser: 100 Gew.-% Bikomponentenfasern, 2,2 dtex/40mm, wobei der Mantel aus Polyethylen mit einem Schmelzpunkt von ca. 128 °C und der Kern aus Polypropylen mit einem Schmelzpunkt von ca. 165 °C besteht Heißluft-verfestigt

Muster 3:    Vergleichsbeispiel
Faser: 50 Gew.-% Bikomponentenfasern, 2,2 dtex/40mm, wobei der Mantel aus Polyethylen mit einem Schmelzpunkt von ca. 128 °C und der Kern aus Polypropylen mit einem Schmelzpunkt von ca. 165 °C besteht, und 50 Gew.-% Polypropylenfasern, 1,3 dtex/40mm Wasserstrahl-und Heißluft-verfestigt

Muster 4:    erfindungsgemäßes Beispiel
Faser: 45 Gew.-%Polypropylenfaser, 1,3 dtex/40mm, 40 Gew.-Polypropylenfasern 2,2 dtex/40mm und 15 Gew.-% Bikomponentenfaser, 2,2 dtex/40mm, wobei der Mantel aus Polyethylen mit einem Schmelzpunkt von ca. 128 °C und der Kern aus Polypropylen mit einem Schmelzpunkt von ca. 165 °C besteht, Wasserstrahl-und Heißluft-verfestigt

Muster 5:    erfindungsgemäßes Beispiel
Faser: 45 Gew.-%Polypropylenfaser, 1,3 dtex/40mm, 45 Gew.-Polypropylenfasern 2,2 dtex/40mm und 10 Gew.-% Bikomponentenfaser, 2,2 dtex/40mm, wobei der Mantel aus Polyethylen mit einem Schmelzpunkt von ca. 128 °C und der Kern aus Polypropylen mit einem Schmelzpunkt von ca. 165 °C besteht, Wasserstrahl-und Heißluft-verfestigt.

Für die Muster, die Bikomponentenfasern enthalten muss bei der Herstellung gewährleistet sein, dass zur Aktivierung bzw. Schmelzen der Bikomponentenfasern im Trockner das Vlies schon getrocknet ist.

Daher liegen die Temperaturen im Bandtrockner in den ersten Zonen unterhalb der Aktivierungstemperatur, so dass nur ein Trocknen erfolgt, und löst die Aktivierung der Bikomponentenfasern erst im letzten Teil des Trockners aus, einem Bereich von ca. 30%.

Beispielhafte Temperaturen sind nachfolgend angeführt.

Temperatur Trocknerzone 1:    116 °C
Temperatur Trocknerzone 2:    102 °C
Temperatur Trocknerzone 3:     96 °C
Temperatur Trocknerzone 4:    130 °C

Im 3-Trommeltrockner werden in der Regel die ersten zwei Trommeln zum Trocknen verwendet und analog zum Bandtrockner in der letzten Trommel die Bikomponentenfasern aktiviert.

Nach der Herstellung wurden die einzelnen Vliesstoffe den nachfolgenden Prüfverfahren unterworfen, um die in der nachfolgenden Tabelle 1 angegebenen Daten zu erhalten.

Im Rahmen der Untersuchungen wurde die Bezeichnung "längs", "Längsrichtung" oder "MD" verwendet um die Ausrichtung eines Musters in der Fertigungsrichtung des Materials, bzw. der Maschinenlaufrichtung, anzugeben. Die Bezeichnungen "quer", "Querrichtung" oder "CD" geben die Ausrichtung des Musters quer zu der Fertigungsrichtung des Materials an. Soweit nicht anders angegeben, wurde bei den Zugversuchen zur Simulation der Breite eines Windelohrs eine Probenbreite von 50 mm bei einer Einspannlänge von 100 mm und einer Abzugsgeschwindigkeit von 500 mm je Minute gewählt.

*Flächengewicht*: gemäß WSP 130.1, Angabe in g/m$^2$

*Dicke:* gemäß WSP 120.6, ermittelt bei 0,5 kPa Messdruck, Angabe in mm

*Maximalkraft Fmax Längs/Quer*: gemäß WSP 110.4, Option A, Angabe in N/50 mm

*Dehnung bei Fmax Längs/Quer*: gemäß WSP 110.4, Option A, Angabe in %

*Dehnung bei 5N Längs/Quer*: gemäß WSP 110.4, Option A, Angabe in %, automatische Ermittlung der Dehnung bei Erreichen einer Kraft von 5N im Zugversuch

*Faser-Bruchdehnung*: gemäß ISO 5079, Angabe in %

*Breiteneinsprung:* dieser wird als Verhältnis der Breite B0 einer Vliesbahn im unbelasteten Zustand flach auf einem Tisch liegen zu der Breite B1 derselben Vliesbahn ermittelt, wenn diese mit einem Zug von 10N belastet wird. Zur Ermittlung der Breite unter Belastung wird ein 150 cm langes und 20 cm breites Vliesmuster zunächst am oberen Ende eines Testaufbaus fixiert, sodass ein mindestens 120 cm langes Vliesstück frei herabhängen kann. Die Fixierung findet dabei so statt, dass die Vliesbahn über die komplette Breite gehalten wird. Nun wird im Abstand von 110 cm zu der oberen Klemmung ein über die komplette Bandbreite fixiertes Massestück angebracht, sodass sich an der Vliesbahn eine Belastung von 10N/20 cm ergibt. Im Abstand von 55 cm zur oberen Klemme wird dann erneut die Breite B1 der Vliesbahn ermittelt. Der Breiteneinsprung ergibt sich dann nach der folgenden Formel:

$$\text{Breiteneinsprung (\%)} = 100 - \left( \frac{B1}{B0} \cdot 100\ \% \right)$$

In der Tabelle 1 sind neben den erfindungsgemäß ausgestalteten Vliesstoffen auch Vliesstoffe gemäß des Standes der Technik, d.h. ein rein wasserstrahlverfestigter Vliesstoff und ein rein heißluftverfestigter Vliesstoff dargestellt.

Kurve 1 in den Figuren 1 und 2 zeigt hierbei schematisch eine klassische Kraft-Dehnungskurve eines wasserstrahlverfestigten Vliesstoffes, zunächst fast linear mit geringster Steigung, kurz vor Erreichen der Höchstzugkraft dann mit progressivem Kurvenverlauf.

Die Kurve 2 in den Figuren 1 und 2 zeigt den typischen Kraft-Dehnungsverlauf eines rein mittels Heißluft verfestigten Vliesstoffes, d.h. linearer Verlauf mit größerer Steigung bis zum Erreichen der höchsten Zugkraft bis zum Bruch der Probe.

Der wasserstrahlverfestigte Vliesstoff zeigt speziell in Querrichtung, vgl Figur 2, zu Beginn der Belastung im Vergleich zu den in der Kurve 2 dargestellten heißluftverfestigten Vliesen eine geringere Steigung der Kurve, die dann aber bei weiterer Dehnung fast exponentiell ansteigt. Der Grund hierfür ist eine Knotenbildung unter den einzelnen Fasern in den Faserverwirbelungspunkten. Dieser Effekt ist für die Anwendung positiv, da der Verwender dieses Verhalten am Windelohr ebenso wahrnimmt, sodass einem Überdehnen während der Verwendung vorgebeugt werden kann.

Die Faserverwirbelungen sind in einem wasserstrahlverfestigten Vlies nicht starr fixiert, sondern in sich beweglich, da die Fasern dreidimensional miteinander verschlungen sind. Die Faserverwirbelungen liegen dabei über die gesamte Fläche des Vliesstoffes gleichmäßig vor. Wirkt eine mechanische Zugbelastung auf ein derartiges Vlies, so können sich die miteinander verwirbelten Fasern über einen weiten Teil dieser Belastung ohne merklichen Kraftanstieg anpassen und ohne dass sich die Faserverwirbelungen auflösen. Die strukturelle Integrität des Vlieses geht dabei nicht verloren.

Diese beweglichen Faserverwirbelungspunkte sind allerdings bei der Herstellung und Weiterverarbeitung derartiger Vliesstoffe durch die damit zusammenhängende hohe Empfindlichkeit gegenüber in Längsrichtung wirkenden Zugkräfte nachteilig. Zugbelastungen in Längsrichtung führen zu Breiteneinsprüngen, die teilweise über 20 % betragen, wie in Tabelle 1, Muster 1 angegeben.

Gemäß der vorliegenden Erfindung werden zusätzlich zu den wasserstrahlverfestigten Stapelfasern Bindefasern eingesetzt, wodurch die Faserverwirbelungen als auch ungebundene Fasern im Faserverbund so fixiert werden, dass der resultierende erfindungsgemäße Vliesstoff einerseits dem Kraft-Dehnungsverhalten eines nur wasserstrahlverfestigten Vliesstoffes angepasst ist und andererseits für Verarbeitungseinflüsse in Längsrichtung unempfindlich ist, d.h. der Breiteneinsprung eines erfindungsgemäßen Vliesstoffes ist gering.

Da der sich der Wasserstrahlverfestigung anschließende Trocknungsprozess nicht nur zur Entfernung von überschüssigen Wasser genutzt wird, sondern auch zu der Aktivierung der in der Fasermischung enthaltenen Bindefasern dient, und somit zu thermischen Verfestigung des Vliesstoffes führt, kann das Verfahren kosteneffizient durchgeführt werden, da keine zusätzlichen Verfahrensschritte oder zeitliche Verlängerung des Verfahrens notwendig sind.

Die in der Tabelle 1 gezeigten Muster 2 bis 5 enthalten jeweils unterschiedliche Anteile an Bindefasern in der Fasermischung.

Ein rein aus Bindefasern bestehendes Vlies, welches auch thermisch verfestigt ist, hat zwar eine gute mechanische Beständigkeit gegenüber Zugbelastungen -der Breiteneinsprung liegt bei 0,8 % - die Höchstzugkräfte und die dazugehörenden Dehnungen sind jedoch zu gering. Ferner ist das Material zu hart für den Einsatz in Hygieneartikeln.

Durch die erfindungsgemäße Zumischung eines Bindefaseranteils, welcher im Trocknungsprozess der Wasserstrahlverfestigung eine zusätzliche thermische Verfestigung ergibt, wirkt ein zusätzlicher Bindemechanismus auf das Vlies. Dieser führt dazu, dass die normalerweise-sehr dehnfähige Struktur eines rein wasserstrahlverfestigten Vlieses blockiert bzw. verriegelt wird.

Wie aus den Beispielen der Muster 3 und insbesondere der erfindungsgemäßen Muster 4 und 5 deutlich wird, sind die Schmelzfaserbindepunkte relativ spröde, weshalb auch der Bruch dieser bereits bei geringer mechanischer Belastung und demnach schon bei Dehnungen zwischen 30-70 % erfolgt.

Durch die Kombination der beiden Verfestigungsverfahren Wasserstrahlen und Heißluft kommt es technologisch gesehen zu einer Überlagerung der Kraft-Dehnungskurven. Dadurch wird die mechanische Stabilität des Vliesstoffes in Längsrichtung und somit auch dessen Verarbeitbarkeit verbessert, ohne dass sich die Eigenschaften bei Querdehnung im funktionellen Bereich verschlechtern.

Das Verhalten eines entsprechenden, Bindefasern enthaltenen Vliesstoffes ist in den Kurven 3 bis 5 der Figuren 1 und 2 dargestellt. Es wird deutlich, dass über den Gewichtsanteil der Bindefasern der Kurvenverlauf im unteren Dehnbereich "eingestellt" und entsprechend den Anforderungen angepasst werden kann.

Nachdem in einem Stapelfaservlies die Festigkeiten, unabhängig von der Bindetechnologie, maßgeblich der Faserlaufrichtung folgen, zum Beispiel bedeutet 4,0-4,5/1 Faserausrichtung MD/CD ein ähnliches Festigkeitsverhältnis, wirkt sich die Zumischung von Bikomponentenfasern auch vorzugsweise in Maschinenlaufrichtung aus, also genau dort wo verarbeitungstechnisch mehr Stabilität benötigt wird, während die funktionellen Eigenschaften in CD-Richtung nicht negativ beeinflusst werden.

Die funktionellen Eigenschaften beschränken sich im Wesentlichen auf:

1. den Kraft/Dehnungsverlauf in Querrichtung, dabei wird eine möglichst hohe Dehnung bei 5 und 10N/5 cm Belastung gefordert

2. weiterhin werden Endfestlichkeiten von 15N/5cm gefordert.

Wie man aus Tabelle 1 erkennen kann, weist das Vergleichsbeispiel gemäß Muster 3 eine Querfestigkeit von 11N/50mm auf, d.h. eine Querfestigkeit, die dem Stand der Technik entspricht. Die Dehnung in Querrichtung bei 5N Belastung ist mit 39 % im Vergleich zu dem Muster 1 unzureichend. Auch ist der Griff durch den Anteil an Bindefasern mit 50 Gew.-% für den gedachten Einsatzzweck zu hart.

Die erfindungsgemäß ausgeführten Muster 4 und 5 weisen einen deutlich reduzierten Anteil an Bindefasern auf, sodass der Anteil an im Vlies vorhandenen Verklebungsstellen deutlich reduziert werden kann. Insbesondere beträgt der Bindefaseranteil bei dem Muster 4 15 Gew.-% und bei dem Muster 5 10 Gew.-% Weitere Untersuchungen haben in diesem Zusammenhang gezeigt, dass Bindefaseranteile von bis zu 25 Gew.-% zu Ergebnissen führen, die die gewünschten Ziele erfüllen.

Die Kraft-Dehnungskurve des Musters 4 ist in den Figuren als Kurve 4 dargestellt. Insbesondere zeigt sich, dass das Material in Bezug auf das Zugverhalten in Querrichtung, vgl. Figur 2, ideal für den Einsatzzweck als Decklagenmaterial ist. Im unteren Bereich der Belastung wird fast keine Kraft aufgebaut, erst gegen Ende der Dehnung-Belastung steigt die Kraft rasch an, sodass sich die erwünschte Stoppfunktion ergibt. Muster 4 weist eine Fmax-Dehnung in Querrichtung in Höhe von 200 % auf, was dem Niveau des nur wasserstrahlverfestigten Musters 1 entspricht.

Eine Erhöhung des Bindefaseranteils auf über 25 Gew.-% wirkt sich jedoch nachteilig auf den Griff aus, sodass dieser Anteil an Bindefasern als Obergrenze festgelegt wurde.

Bei dem Muster 5, dargestellt als Kurve 5 in den Figuren 1 und 2, wurde der Anteil an Bindefasern nochmals reduziert. Die Kurve nähert sich stark der Kurve 1, das heißt dem nur wasserstrahlverfestigten Muster, an, sodass eine weitere Reduzierung des Bindefaseranteils immer mehr dem rein wasserstrahlverfestigten Vliesstoff entspricht. In diesem Zusammenhang hat sich herausgestellt, dass ein Bindefaseranteil von 5 Gew.-% eine Untergrenze für ein erfindungsgemäßen Vliesstoff darstellt.

Bezüglich des Breiteneinsprungs bei der Verarbeitungsspannung von ca. 10N in Längsrichtung zeigt sich, dass das Muster 4 mit einem Breiteneinsprung von 2,4 % eine sehr gute Längsstabilität aufweist, ohne bei Querdehnung eine zu starke Steigung zu entwickeln. Das Muster 5 weist einen Breiteneinsprung von 5,1 % auf, d.h. einen Wert dennoch akzeptabel ist, und besitzt eine K/D-Kurve die fast dem des Musters 1 entspricht, insbesondere in Bezug auf die Querrichtung.

Erfindungsgemäß hergestellte Vliesstoff, d.h. Vliesstoffe im Gewichtsbereich von 15-40 g/Quadratmeter, die einen Anteil von 5-25 Gewichtsprozent Bindefaser aufweisen und bei welchen die Wasserstrahlverfestigung mit einer daran anschließenden thermischen Verfestigung mittels Heißluft ausgeführt wird, erfüllen die eingangs definierten Anforderungen a. bis h. an dehnfähige Decklagenmaterialien.

Derart erfindungsgemäß hergestellte Vliesstoffe sind insbesondere als Decklagenmaterialien für elastische Verschlusssysteme besonders geeignet, da diese im Vergleich zum Stand der Technik alle Punkte des eingangs genannten Anforderungsprofils erfüllen.

Tabelle 1

| | Muster 1 Vergleichsbeispiel (Stand der Technik) | Muster 2 Vergleichsbeispiel (Stand der Technik) | Muster 3 Vergleichsbeispiel | Muster 4 Erfindungsgemäßes Beispiel | Muster 4 Erfindungsgemäßes Beispiel |
|---|---|---|---|---|---|
| Verfestigungsart | wasserstrahl | thermisch | wasserstrahl/ thermisch | wasserstrahl/ thermisch | wasserstrahl/ thermisch |
| Anteil an Bindefasern (Gew.-%) | 0 | 100 | 50 | 15 | 10 |
| Flächengewicht (g/m$^2$) | 25,1 | 26,4 | 25,9 | 25,6 | 26,4 |
| Dicke (mm) | 0,56 | 0,49 | 0,70 | 0,48 | 0,52 |
| Fmax MD (N/50mm) | 48 | 19 | 72 | 65 | 64 |
| Fmax CD (N/50mm) | 17 | 11 | 21 | 20 | 19 |
| Breiteneinsprung bei 1kg Belastung (%) | 22,2 | 0,8 | 1,4 | 2,4 | 5,1 |
| Dehnung bei Fmax MD (%) | 70,0 | 22 | 25 | 51,0 | 63,5 |
| Dehnung bei Fmax CD (%) | 187,0 | 46,0 | 115,0 | 200,0 | 194,0 |
| Dehnung bei 5N CD (%) | 115 | 18 | 39 | 104 | 105 |
| Dehnung bei 5N MD (%) | 10 | 7,9 | 1,67 | 3 | 6,9 |

**Patentansprüche**

1. Dehnbarer Vliesstoff, insbesondere Deckmateriallage für ein mehrschichtiges Laminat, umfassend wasserstrahlverfestigte und thermisch behandelte Stapelfasern, **dadurch gekennzeichnet, dass**

   - der Vliesstoff 40-45 Gew.-% erste Stapelfasern mit 1,3 dtex/40mm, 40-45 Gew.-% zweite Stapelfasern mit 2,2 dtex/40 mm und 10-20 Gew.-% Schmelzfasern mit 2,2 dtex/40mm enthält,
   - die Stapelfasern und Bindefasern miteinander vermischt und zur Herstellung des Vlieses kardiert wurden
   - das kardierte Vlies mittels Wasserstrahlen verfestigt und anschließend einer Trocknung mit Heißluft zur Entfernung überschüssigem Wasser unterzogen wurde, wobei die Bindefasern während der Trocknung aktiviert und thermisch verfestigt wurden.

2. Dehnbarer Vliesstoff nach Anspruch 1, **gekennzeichnet durch** einen Gewichtsbereich von 15 bis 40 g/Quadratmeter.

3. Elastisches, mehrlagiges Laminat zur Verwendung in einem Verschlusssystem für persönliche Hygieneartikel, bestehend aus einem elastischen Basismaterial, ein-oder beidseitig abgedeckt mit einem Deckmaterial, **dadurch gekennzeichnet, dass** das Deckmaterial aus einem dehnbaren Vliesstoff nach einem der Ansprüche 1 bis 2 gebildet ist.

**Claims**

1. An expandable non-woven material, in particular a cover material layer for a multi-layered laminate, comprising water jet-solidified and thermally-treated staple fibres, **characterised in that**

   - the non-woven material contains 40-45 wt.% of first staple fibres at 1.3 dtex/40mm, 40-45 wt.% of second staple fibres at 2.2 dtex/40 mm and 10-20 wt.% of melt fibres at 2.2 dtex/40mm,
   - the staple fibres and binding fibres were mixed together and carded to produce the nonwoven material,
   - the carded non-woven material was solidified using water jets and then subjected to hot-air drying to remove excess water, wherein the binding fibres were activated and thermally solidified during drying.

2. The expandable non-woven material according to claim 1, **characterised by** a weight range of 15 to 40 g/square meter.

3. An elastic, multi-layered laminate for use in a sealing system for personal hygiene articles, consisting of an elastic base material, covered on one or both sides by a cover material, **characterised in that** the cover material is formed from an expandable non-woven material according to one of claims 1 and 2.

**Revendications**

1. Tissu non tissé étirable, notamment, couche de matériau de couverture pour un composite en plusieurs couches, comprenant des fibres d'empilement durcies par jet d'eau et traitées thermiquement, **caractérisé en ce que**

   - le tissu non tissé contient de 40 à 45 % en poids de premières fibres d'empilement avec un 1,3 dtex/40 mm, de 40 à 45 % en poids de deuxièmes fibres d'empilement avec un 2,2 dtex/40 mm et de 10 à 20 % en poids de fibres de fusion avec un 2,2 dtex/40 mm,
   - les fibres d'empilement et les fibres de liaison ont été mélangées entre elles et ont été cardées pour la fabrication du non tissé,
   - le non tissé cardé a été durci au moyen d'un jet d'eau et ensuite soumis à un séchage avec de l'air chaud pour le retrait de l'eau en excès, les fibres de liaison ayant été activées et durcies thermiquement pendant le séchage.

2. Tissu non tissé étirable selon la revendication 1, **caractérisé par** une plage de poids de 15 à 40 g/mètre carré.

3. Composite élastique, en plusieurs couches, destiné à l'utilisation dans un système de fermeture pour des articles d'hygiène personnelle, constitué d'un matériau de base élastique, recouvert sur une face ou sur les deux faces avec un matériau de couverture,
**caractérisé en ce que**
le matériau de couverture est formé à base d'un tissu non tissé étirable selon l'une des revendications 1 et 2.

**Figur 1 MD**

EP 3 128 057 B1

Figur 2 (CD)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2069141 B1
- EP 1921192 B1
- US 5240764 A
- US 20030213546 A1
- US 20070141926 A1
- US 5334446 A

**In der Beschreibung aufgeführte Nicht-Patentliteratur**

- **DR. HORNFECK ; BERNHUBER.** Performance and Fit. *Nonwoven Industry,* Januar 2013, 56-62
- **BUCH.** Vliesstoffe. Verlag Wiley VCH, 2012, 340-359
- **BUCH.** Vliesstoffe. Verlag Wiley VCH, 2012, 375-382